# EUROPEAN PATENT SPECIFICATION

(11) **EP 4 276 306 B1**
(45) Date of publication and mention of the grant of the patent: **03.06.2026**
(21) Application number: 22172991.6
(22) Date of filing: 12.05.2022
(51) Int. Cl.: F03H 1/00

(54) **ION SOURCE**
IONENQUELLE
SOURCE D'IONS

(43) Date of publication of application: 15.11.2023
(73) Proprietor: ENPULSION GmbH, 1300 Wien-Flughafen (AT)
(72) Inventor: KREJCI, David, 4552 Wartberg an der Krems (AT); VASILJEVICH, Ivanhoe, 1100 Wien (AT); KOCH, Quirin, 1150 Wien (AT)
(74) Representative: Weiser Voith Gugler Patentanwälte Partnerschaft

(56) References cited:
- WO-A1-2019/113617
- WO-A1-2020/161434
- CN-A- 102 678 501
- US-A1- 2016 333 865
- US-A1- 2017 191 471
- US-A1- 2020 373 141

## Description

The present invention relates to an ion source comprising a reservoir for a propellant that has a solid state and can be liquefied into a liquid state, a heater for liquefying the propellant in the reservoir, an emitter in fluid communication with the reservoir for receiving a stream of liquefied propellant from the reservoir, an extractor facing the emitter for extracting ions of the liquefied propellant from the emitter and accelerating the extracted ions away from the emitter.

Ion sources are used, e.g., for ion implantation or for creating focussed ion beams in semiconductor industry, in metal finishing, in material science and/or analysis, or in ion thrusters for the propulsion of spacecraft. In a liquid metal ion source ("LMIS"), the propellant is a metal (usually either caesium, indium, gallium, mercury or bismuth). In so-called colloid or electrospray ion sources, the propellant is typically a molten salt or the like. In either case, the propellant can be heated to liquefy into its liquid state in the reservoir by the heater and received therefrom by the emitter. From the emitter, ions of the liquefied propellant are electrically extracted and accelerated by the extractor to form a directed beam of ions, which in case of an ion thruster provides the thrust.

To achieve a strong electric field between the emitter and the extractor, which is necessary for ion extraction, the emitter has one or more emission sites, typically projections in the shape of cones, pyramids, triangular prisms, needles or the like. The emission sites are sharp-tipped or sharp-edged to utilize the field-concentrating effect of the tip or edge. Applying the electric field to such a sharp tip or edge causes the formation of a so-called Taylor cone on top of the tip or edge of the emitter's projection which enhances the field-concentrating effect.

For transporting liquid propellant from the reservoir to the sharp tip or edge of each projection of the emitter, passive forces, like capillary effects produced by capillary ducts penetrating the emitter (as described, e.g., in AT 500 412 A1 or US 4 328 667 B) or by a porous emitter (as described, e.g., in US 2016/0297549 A1 or EP 3 724 497 A1) and/or by adhesion effects on the wetting surface of the emitter's projections (as described, e.g., in US 2009/114838 A1 or US 2011/192968 A1), are usually employed in the ion source. US 2017/191471 A1 discloses an ion source where baffles are provided in a manifold chamber to uniformly distribute propellant to the inlet ends of a number of microthrusters in a cluster and to insure an acceptably uniform flowrate of monopropellant to all of the microthrusters. Under certain conditions, however, e.g. when the ion emission and the heating of the reservoir is paused such that the propellant solidifies in the reservoir, propellant is retracted from the emitter into the reservoir due to strong contraction forces inside the reservoir during solidification of the propellant. In such cases of retraction of propellant, the above-mentioned passive forces might not be sufficient to restart the propellant supply to the emitter when the ion source is reheated. As a result, the ion source may fail after having been paused. Countermeasures such as applying external forces, e.g. pressurising the reservoir from a separate pressure reservoir or by means of mechanical pumps or pistons, are not desirable for safety, reliability and complexity reasons, particularly in spacecraft.

It is an object of the present invention to provide a safe, reliable and efficient ion source.

This object is achieved with an ion source comprising at least one baffle which is arranged upstream of the emitter in the stream of the propellant to the emitter. The at least one baffle is a mechanical obstruction that limits the cross-sectional area of the propellant stream and deflects the propellant stream. This decreases cohesive forces between the small volume of propellant on the emitter's side of the baffle/s and the large volume of propellant on the reservoir's side of the baffle/s. The contracting forces exerted on the propellant when the propellant solidifies (but also in other cases where the propellant is retracted into the reservoir, e.g. due to heavy gravitational or acceleration forces) are deflected by the baffle/s and, thereby, substantially reduced. Breaking-up the passive, e.g. capillary, feed of the propellant because of retraction of propellant into the reservoir can be prevented at least at the emitter's side of the baffle/s. Nevertheless, the baffle/s does/do not significantly impede the stream of the propellant from the reservoir to the emitter by the weak passive forces because the flow rate of the stream is relatively small resulting in a small hydraulic impedance.

During uniform cooling down of the propellant, the solidification starts at the point of lowest thermal mass. In comparison to the reservoir, the propellant mass and consequently the thermal mass at the location where the cross-sectional area is limited by the baffle/s is substantially smaller. As a consequence, the propellant solidifies earlier at this location. This leads to a chocking effect on the solidifying propellant at the baffle/s, which further impedes retraction of propellant from the emitter towards the reservoir.

By introducing the baffle/s, the ion source can be safely shut down when not in operation, letting the propellant solidify to reduce power consumption and to increase efficiency, and, when reactivating the ion source and liquefying the propellant, operation will reliably resume. Moreover, the ion source is safer and more reliable in operation than ion sources that use pressurised reservoirs and/or mechanical pumps or pistons to force the supply of propellant to the emitter.

In an advantageous embodiment, at least two baffles are spaced apart in the direction from the reservoir to the emitter and staggered to induce a meandering stream of the propellant to the emitter. Thereby, the cohesive forces of the propellant in and around the emitter and of propellant in the reservoir are further decreased and the retraction of propellant from the emitter is even better impeded. In a particularly beneficial variant thereof which enhances the effects of decreasing cohesive forces and of impeding retraction of propellant from the emitter, two neighbouring baffles, seen in a longitudinal section of the ion source, are L-shaped with two legs, the one leg of each baffle facing the other baffle.

In further favourable embodiments, the at least one baffle is a frustum or a cage. The frustum, i.e. a part of a pyramid or of a cone, constitutes a particularly robust embodiment of a baffle. On the other hand, a cage-type baffle allows for a flexible adaptation to different requirements. Two or more baffles of the same type, of similar types or of different types may, of course, be combined.

In an advantageous embodiment the at least one baffle is mounted on spaced pins to an annular wall surrounding the emitter. Alternatively, the at least one baffle may be mounted on a rod extending from the emitter towards the reservoir. Such mounting pins or rods enhance the freedom of design both for the reservoir, the emitter and the baffles and facilitate the introduction of baffles. The rod may optionally also be supported on an end wall of the reservoir. Thereby, the rod may not only mount the baffle/s but also the emitter from which it extends.

In a favourable embodiment, the fluid communication is established by a channel which connects the emitter to the reservoir, wherein the at least one baffle protrudes into the channel. The channel already restricts the cross-sectional area of the stream of the propellant, which further enhances the effects of decrease of cohesive forces of the propellant and of retraction forces. Moreover, one or more of the baffle/s may be mounted on lateral walls of the channel, resulting in a particularly solid mounting. The channel may simply be formed by the neck of a bottle-shaped reservoir.

The channel may have any cross section and extension, e.g., be cylindrical, prismatic, and may even be curved. In a beneficial embodiment, the channel tapers towards the emitter. This ensures an efficient supply of propellant from the reservoir to the emitter and facilitates a particularly small volume for the propellant on the emitter's side of the baffle/s to achieve the effect of decreasing retracting forces from the reservoir.

The shape of the cross section of the channel may, e.g., be square, rectangular, polygonal, elliptic, etc. In an advantageous embodiment, the channel has a circular cross section. Thereby, a maximum area for the passage of propellant is achieved at minimum circumference. Moreover, the baffle/s may also be circular with inner through-holes or disc segment-shaped etc. and either be mounted on the channels walls or be mounted using the abovementioned rod or pins.

The invention shall now be explained in more detail below on the basis of exemplary embodiments thereof with reference to the accompanying drawings, in which:
Figs. 1a and 1b show two embodiments of an ion source according to the invention having two baffles (Fig. 1a) or one baffle (Fig. 1b) arranged in a stream of propellant from a reservoir to an emitter of the ion source, each in a respective longitudinal section;
Figs. 2a to 2c show further embodiments of the ion source according to the invention with multiple baffles, each in a fragmentary longitudinal section;
Fig. 3 shows a further embodiment of the ion source according to the invention having an emitter with an array of emission sites and two baffles in a fragmentary longitudinal section;
Figs. 4a to 4c show further embodiments of the ion source according to the invention having frustum-shaped baffles, each in a fragmentary longitudinal section;
Fig. 5a shows a further embodiment of the ion source according to the invention having a cage-shaped baffle in a fragmentary longitudinal section, and Fig. 5b the cage-shaped baffle of Fig. 5a in a perspective side view; and
Fig. 6a shows a further embodiment of the ion source of Fig. 1 having mounting pins for the baffle in a fragmentary longitudinal section, and Fig. 6b the pins and baffle of Fig. 6a in a perspective side view.

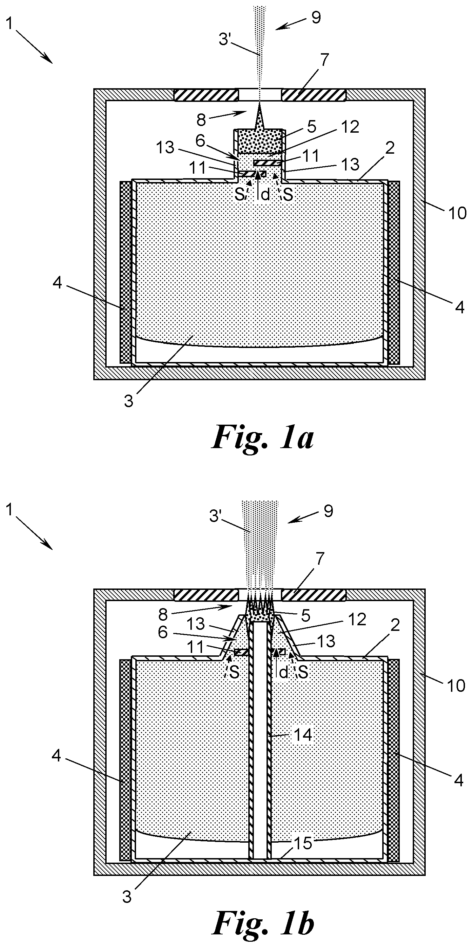

Figs. 1a and 1b show two different exemplary embodiments of an ion source 1. The ion source 1 comprises a reservoir 2 for a propellant 3. The propellant 3 generally has solid state and can be liquefied from its solid state into a liquid state. To this end, the ion source 1 comprises a heater 4 which, when activated, heats and liquefies the propellant 3 in the reservoir 2. The heater 4 is connected to or irradiates the reservoir 2.

The ion source 1 also comprises an emitter 5 which is in fluid communication with the reservoir 2. The fluid communication lets the emitter 5 receive a stream S of liquefied propellant 3 from the reservoir 2 during operation of the ion source 1. In the examples of Figs. 1a and 1b, the ion source 1 comprises an optional channel 6 which connects the emitter 5 to the reservoir 2 to establish the fluid communication therebetween. The channel 6 may be a neck of the substantially bottle-shaped reservoir 2. However, the reservoir 2 may be of different shape and the channel 6 may be attached to the reservoir 2 in any other form or may be omitted.

For extracting ions 3' of the liquefied propellant 3 from the emitter 5 and accelerating the extracted ions 3', the ion source 1 comprises an extractor 7 facing the emitter 5. A strong electric field is applied to the emitter 5 and the extractor 7 by connecting a voltage source of a few kilovolts (kV). The emitter 5 may have one (Fig. 1a) or more (Fig. 1b) emission sites 8, each of which is a projection in the shape of a cone, a pyramid, a triangular prism, a needle or the like and has a sharp tip or edge on that side of the emitter 5 directing away from the reservoir 2. Applying the strong electric field to such a sharp tip or edge causes the formation of a so-called Taylor cone on top of the tip or edge of each emission site 8. At the apex of the Taylor cone, the ions 3' are extracted and accelerated by the strong electric field between the extractor 7 and the emitter 5, thereby creating an ion beam 9 that is directed away from the emitter 5 and - when the extractor 7 is mounted, e.g., in a housing 10 of the ion source 1 as in this example - away from the ion source 1.

The ion source 1 can be used, e.g., for ion implantation or for creating focused ion beams in semi-conductor industry, in metal finishing, in material science and/or analysis, and particularly as an ion thruster for propelling spacecraft. Moreover, the ion source 1 may comprise or be connected to further elements, e.g. a controller, a power supply, the voltage source, a neutralizer etc., as known in the art.

The propellant 3 in the embodiments of Figs. 1a and 1b is a metal, e.g. caesium, indium, gallium, mercury or bismuth etc. In such a "liquid metal ion source" ("LMIS"), neutral atoms of the liquefied metal propellant 3 field-evaporate at the apex of the Taylor cone and negative electrons tunnel back to the surface, leaving positively charged ions 3' of the liquid metal propellant 3 for extraction. Hence, the propellant 3 is both ionised, extracted and accelerated by one and the same electric field between the extractor 7 and the emitter 5. In ion sources 1 of the "colloid" or "electrospray" type, on the other hand, the propellant 3 is, e.g., a salt which is ionized in its liquefied state such that positively or negatively charged ions are extracted from the emitter 5 and accelerated by the electric field.

For receiving the liquefied propellant 3 from the reservoir 2 in the emitter 5 and transporting it to the emission site(s) 8, passive forces (here: capillary effects) are typically used. To this end, the emitter 5 is, e.g., penetrated by capillary ducts (not shown) or (in the present example) made of porous material. The emission sites 8 are likewise penetrated by capillary ducts or made of porous material and/or they have a wetting surface to which the liquefied propellant 3 adheres.

When operation of the ion source 1 is not required, heating of the reservoir 2 and emission of ions 3' may be paused. The propellant 3 will then freeze (solidify) in the emitter 5, the optional channel 6 and the reservoir 2. During solidification, propellant 3 may be retracted from the emitter 5 towards the reservoir 2 due to the strong contraction forces inside the reservoir 2 having the larger propellant volume and due to cohesive forces of the propellant 3.

Excessive retraction of propellant 3 from the emitter 5 would impede a subsequent formation of a Taylor cone after heating the reservoir 2 for resuming operation. To avoid this, the ion source 1 has at least one baffle 11 which is arranged upstream of the emitter 3 in the stream S of the propellant 3 to the emitter 5, limiting the cross-sectional area of the stream S. Possible retracting forces exerted on the propellant 3 in and close to the emitter 5, particularly in a small volume 12 of propellant 3 on the emitter's side of the baffle/s 11, e.g., due to solidification of propellant 3 (or due to other reasons), are substantially reduced and also re-directed around the baffle/s 11.

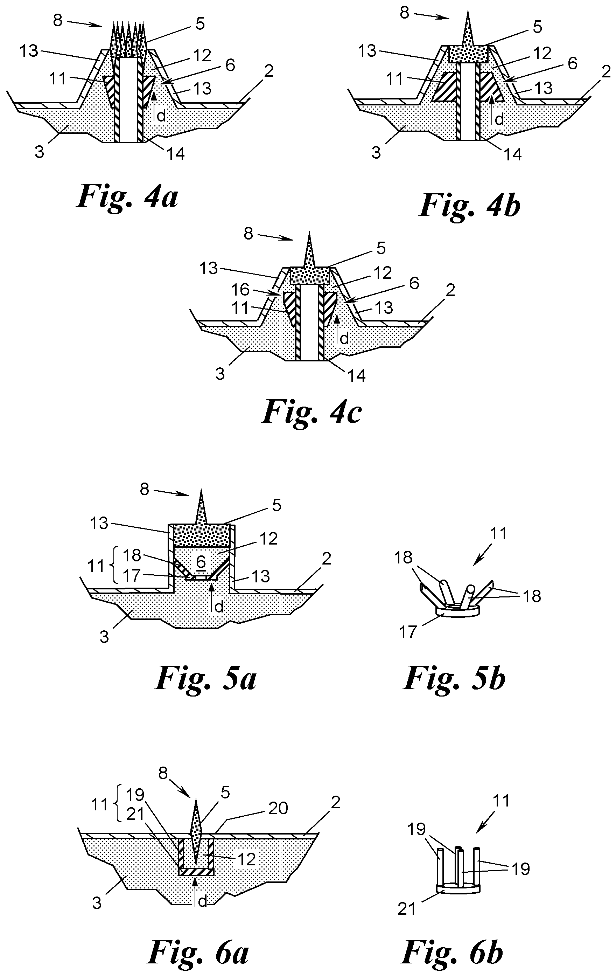

In the example of Fig. 1a, the channel 6 is cylindrical or prismatic with a circular, a polygonal or an elliptic cross section and has two baffles 11 arranged upstream of the emitter 5 in the stream S (here: protruding from lateral channel walls 13 into the channel 6). The two baffles 11 are spaced apart in a direction d from the reservoir 2 to the emitter 5. As shown, the baffles 11 may be staggered to induce a meandering stream of the propellant 3 through the channel 6 to the emitter 5. However, the channel 6 is not required as will be explicated in greater detail below with reference to Figs. 5a and 6a.

In the example of Fig. 1b, the channel 6, while having the same cross section as that of Fig. 1a, tapers towards the emitter 5. The ion source 1 comprises only one baffle 11 arranged in the stream S (here: protruding into the channel 6). Moreover, the baffle 11 is mounted on a rod 14 which extends from the emitter 5 towards the reservoir 2. Hence, the baffle 11 is ring-shaped around the rod 14. The rod 14 optionally also extends through the whole reservoir 2 to an end wall 15 thereof opposite the emitter 5. In the example of Fig. 1b, the emitter 5 is mounted at an end of the rod 14 and is crown-shaped with a plurality of emission sites 8 in an annular arrangement.

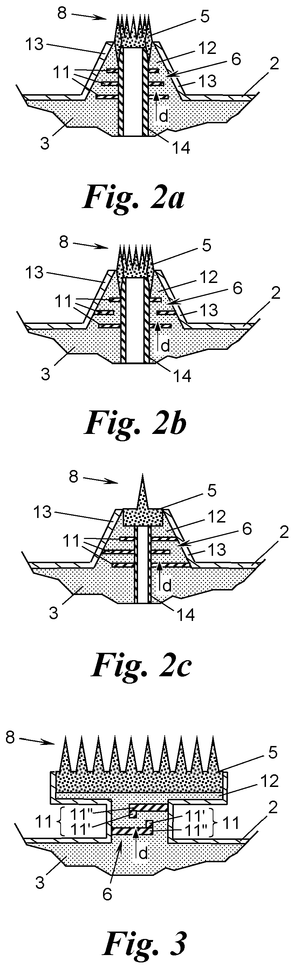

Figs. 2a - 2c show different arrangements of (here: three) baffles 11. Similar to the example of Fig. 1a, the baffles 11 in these embodiments are spaced apart from one another in the direction d. In the variant of Fig. 2a, all baffles 11 are mounted on the rod 14 that extends from the emitter 5 substantially in the centre of the reservoir 2 and the channel 6. The channel 6 is optionally tapered as described above with respect to Fig. 1b; correspondingly, the baffles 11 may increase in size with their distance from the emitter 5, however, this is optional.

In the variant of Fig. 2b, the baffles 11 are staggered, thereby inducing a meandering stream S of the propellant 3 to the emitter 5. Here, two of the baffles 11 are mounted on the rod 14 and protrude therefrom into the channel 6, whereas the remaining intermediate baffle 11 protrudes from the lateral channel walls 13 into the channel 6.

The embodiment of Fig. 2c is again similar to the one of Fig. 1a in that successive baffles 11 - when seen in the direction d - protrude into the channel 6 from different sides of the lateral channel walls 13. The baffles 11 may optionally be mounted both on the rod 14 and on one of the lateral channel walls 13.

Fig. 3 shows an embodiment in which the emitter 5 has a plurality of emission sites 8 arranged in an array on the emitter 5. The (at least) two baffles 11 are staggered and L-shaped (seen in the longitudinal section of the ion source 1), each with two legs 11', 11", one leg 11' of each baffle 11 facing the other baffle 11. Thereby, the stream S of the propellant 3 is even more meandering.

In the embodiments of Figs. 4a - 4c, the (at least one) baffle 11 is a frustum, i.e. a part of a pyramid or of a cone, the axis of which is generally substantially parallel to the direction d. In the embodiment of Fig. 4a, the frustum tapers away from emitter 5. Alternatively, the frustum may taper towards the emitter 5 (Fig. 4b). When the channel 6 also tapers towards the emitter 5, the lateral surface of the frustum is optionally parallel to the lateral channel walls 13.

Fig. 4c shows a slightly different variant in which the frustum has a substantially cylindrical or prismatic end section 16 on its larger diameter end. It shall be understood that the frustum-shaped baffle 11 in this embodiment may taper away from the emitter 5 as shown or, alternatively, towards the emitter 5.

The baffle 11 shown in the embodiment of Figs. 5a and 5b is a cage which extends into the channel 6 as shown, or, particularly in the absence of the channel 6, into the reservoir 2 (not shown). In any case, the baffle/s 11 is/are arranged upstream of the emitter 5 in the stream S of the propellant 3 to the emitter 5. The cage-shaped baffle 11 can be made of bars, blades or the like. In the present case, the baffle 11 is made of a perforated disc 17 and four bars 18 for mounting the disk 17 onto the lateral channel walls 13 of the channel 6, onto walls of the reservoir 2, onto the emitter 5 or elsewhere. It goes without saying, that two or more cage-type baffles 11 can be arranged upstream of the emitter 5.

Figs. 6a and 6b exemplarily show an embodiment without a channel 6. The baffle 11 shown in this example is mounted on pins 19 that are spaced from each other and extend into the reservoir 2 (in other embodiments: into the channel 6) from an annular wall 20 that surrounds the emitter 5. As shown in Fig. 6b, the baffle 11 may be a disc 21 that is mounted on the pins 19. However, the baffle 11 may be of different shape and/or the pins 19 may be of a different number, orientation etc. Moreover, more than one baffle 11 may be mounted on the pins 19.

It shall be understood that the embodiments shown in the drawings and described above are only exemplary. In particular, emitters 5 of different types and/or shapes, e.g. having different numbers of emission sites 8, may be combined with channels 6 of one or another shape and/or with baffles 11 of one or another number, shape, size and/or arrangement. For instance, a rod 14 may be used with any type of emitter 5 and may be hollow or solid. Furthermore, baffles 11 of different shapes and/or sizes may be combined in any way. Hence, the invention is not restricted to the specific embodiments described in detail herein but encompasses all variants, modifications and combinations thereof that fall within the scope of the appended claims.

## Claims

1. An ion source, in particular an ion thruster for propelling a spacecraft, comprising
a reservoir (2) for a propellant (3) that has a solid state and can be liquefied into a liquid state,
a heater (4) for liquefying the propellant (3) in the reservoir (2),
an emitter (5) in fluid communication with the reservoir (2) for receiving a stream (S) of liquefied propellant (3) from the reservoir (2),
an extractor (7) facing the emitter (5) for extracting ions (3') of the liquefied propellant (3) from the emitter (5) and accelerating the extracted ions (3') away from the emitter (5),
at least one baffle (11) which is arranged upstream of the emitter (5) in the stream (S) of the propellant (3) to the emitter (5) and is a mechanical obstruction that limits the cross-sectional area of the propellant stream (S), deflects the propellant stream (S) and, thereby, creates a small volume (12) of propellant (3) on the emitter's side of the at least one baffle (11) and a large volume of propellant (3) on the opposite reservoir's side of the at least one baffle (11).

2. The ion source according to claim 1, **characterised by** at least two baffles (11) which are spaced apart in a direction (d) from the reservoir (2) to the emitter (5) and staggered to induce a meandering stream (S) of the propellant (3) to the emitter (5).

3. The ion source according to claim 2, **characterised in that** two neighbouring baffles (11), seen in a longitudinal section of the ion source (1), are L-shaped with two legs (11', 11"), the one leg (11') of each baffle (11) facing the other baffle (11).

4. The ion source according to claim 1 or 2, **characterised in that** the at least one baffle (11) is a frustum.

5. The ion source according to claim 1 or 2, **characterised in that** the at least one baffle (11) is a cage (17, 18).

6. The ion source according to any one of claims 1 to 5, **characterised in that** the at least one baffle (11) is mounted on spaced pins (19) to an annular wall (20) surrounding the emitter (5).

7. The ion source according to any one of claims 1 to 5, **characterised in that** the at least one baffle (11) is mounted on a rod (14) extending from the emitter (5) towards the reservoir (2).

8. The ion source according to any one of claims 1 to 7, **characterised in that** the fluid communication is established by a channel (6) which connects the emitter (5) to the reservoir (2), wherein the at least one baffle (11) protrudes into the channel (6).

9. The ion source according to claim 8, **characterised in that** the channel (6) tapers towards the emitter (5).

10. The ion source according to claims 8 or 9, **characterised in that** the channel (6) has a circular cross section.

## Patentansprüche

1. Ionenquelle, insbesondere Ionentriebwerk zum Antreiben eines Raumfahrzeugs, umfassend
ein Reservoir (2) für einen Treibstoff (3), welcher einen festen Zustand hat und in einen flüssigen Zustand verflüssigt werden kann,
ein Heizelement (4) zum Verflüssigen des Treibstoffs (3) im Reservoir (2),
einen mit dem Reservoir (2) in Fluidverbindung stehenden Emitter (5) zum Aufnehmen eines Stroms (S) von verflüssigtem Treibstoff (3) aus dem Reservoir (2),
einen dem Emitter (5) zugewandten Extraktor (7) zum Extrahieren von Ionen (3') des verflüssigten Treibstoffs (3) aus dem Emitter (5) und zum Beschleunigen der extrahierten Ionen (3') weg vom Emitter (5),
zumindest ein Ablenkelement (11), welches stromaufwärts vom Emitter (5) im Strom (S) des Treibstoffs (3) zum Emitter (5) angeordnet ist und ein mechanisches Hindernis ist, welches die Querschnittsfläche des Treibstoffstroms (S) begrenzt, den Treibstoffstrom (S) ablenkt und dadurch ein kleines Volumen (12) von Treibstoff (3) auf der Emitterseite des zumindest einen Ablenkelements (11) und ein großes Volumen von Treibstoff (3) auf der gegenüberliegenden Reservoirseite des zumindest einen Ablenkelements (11) erzeugt.

2. Ionenquelle nach Anspruch 1, **gekennzeichnet durch** zumindest zwei Ablenkelemente (11), welche in einer Richtung (d) vom Reservoir (2) zum Emitter (5) beabstandet und versetzt angeordnet sind, um einen mäanderförmigen Strom (S) des Treibstoffs (3) zum Emitter (5) zu bewirken.

3. Ionenquelle nach Anspruch 2, **dadurch gekennzeichnet, dass** zwei benachbarte Ablenkelemente (11), in einem Längsschnitt der Ionenquelle (1) gesehen, L-förmig mit zwei Schenkeln (11', 11") sind, wobei der eine Schenkel (11') jedes Ablenkelements (11) dem anderen Ablenkelement (11) zugewandt ist.

4. Ionenquelle nach Anspruch 1 oder 2, **dadurch gekennzeichnet, dass** das zumindest eine Ablenkelement (11) ein Pyramiden- oder Kegelstumpf ist.

5. Ionenquelle nach Anspruch 1 oder 2, **dadurch gekennzeichnet, dass** das zumindest eine Ablenkelement (11) ein Käfig (17, 18) ist.

6. Ionenquelle nach einem der Ansprüche 1 bis 5, **dadurch gekennzeichnet, dass** das zumindest eine Ablenkelement (11) auf beabstandeten Stiften (19) an einer den Emitter (5) umgebenden ringförmigen Wand (20) montiert ist.

7. Ionenquelle nach einem der Ansprüche 1 bis 5, **dadurch gekennzeichnet, dass** das zumindest eine Ablenkelement (11) auf einem sich vom Emitter (5) zum Reservoir (2) erstreckenden Stab (14) montiert ist.

8. Ionenquelle nach einem der Ansprüche 1 bis 7, **dadurch gekennzeichnet, dass** die Fluidverbindung durch einen Kanal (6) hergestellt ist, welcher den Emitter (5) mit dem Reservoir (2) verbindet, wobei das zumindest eine Ablenkelement (11) in den Kanal (6) hineinragt.

9. Ionenquelle nach Anspruch 8, **dadurch gekennzeichnet, dass** sich der Kanal (6) zum Emitter (5) hin verjüngt.

10. Ionenquelle nach Anspruch 8 oder 9, **dadurch gekennzeichnet, dass** der Kanal (6) einen kreisförmigen Querschnitt hat.

## Revendications

1. Source d'ions, en particulier propulseur d'ions pour la propulsion d'un véhicule spatial, comprenant
un réservoir (2) pour un agent propulseur (3) qui a un état solide et peut être liquéfié en un état liquide,
un élément chauffant (4) pour la liquéfaction de l'agent propulseur (3) dans le réservoir (2),
un émetteur (5) en communication fluidique avec le réservoir (2) pour recevoir un flux (S) d'agent propulseur liquéfié (3) provenant du réservoir (2),
un extracteur (7) faisant face à l'émetteur (5) pour l'extraction d'ions (3') de l'agent propulseur liquéfié (3) de l'émetteur (5) et l'accélération des ions extraits (3') loin de l'émetteur (5),
au moins un déflecteur (11) qui est disposé en amont de l'émetteur (5) dans le flux (S) de l'agent propulseur (3) vers l'émetteur (5) et est un obstacle mécanique qui limite la section transversale du flux d'agent propulseur (S), dévie le flux d'agent propulseur (S) et, ainsi, crée un petit volume (12) d'agent propulseur (3) sur le côté émetteur de l'au moins un déflecteur (11) et un grand volume d'agent propulseur (3) sur le côté opposé, côté réservoir de l'au moins un déflecteur (11).

2. Source d'ions selon la revendication 1, **caractérisée par** au moins deux déflecteurs (11) qui sont espacés dans une direction (d) du réservoir (2) vers l'émetteur (5) et décalés pour induire un flux méandrique (S) de l'agent propulseur (3) vers l'émetteur (5).

3. Source d'ions selon la revendication 2, **caractérisée en ce que** deux déflecteurs voisins (11), vus dans une coupe longitudinale de la source d'ions (1), sont en forme de L avec deux branches (11', 11"), l'une branche (11') de chaque déflecteur (11) faisant face à l'autre déflecteur (11).

4. Source d'ions selon la revendication 1 ou 2, **caractérisée en ce que** l'au moins un déflecteur (11) est un tronc.

5. Source d'ions selon la revendication 1 ou 2, **caractérisée en ce que** l'au moins un déflecteur (11) est une cage (17, 18).

6. Source d'ions selon l'une quelconque des revendications 1 à 5, **caractérisée en ce que** l'au moins un déflecteur (11) est monté sur des broches espacées (19) sur une paroi annulaire (20) entourant l'émetteur (5).

7. Source d'ions selon l'une quelconque des revendications 1 à 5, **caractérisée en ce que** l'au moins un déflecteur (11) est monté sur une tige (14) s'étendant de l'émetteur (5) vers le réservoir (2).

8. Source d'ions selon l'une quelconque des revendications 1 à 7, **caractérisée en ce que** la communication fluidique est établie par un canal (6) qui relie l'émetteur (5) au réservoir (2), dans laquelle l'au moins un déflecteur (11) fait saillie dans le canal (6).

9. Source d'ions selon la revendication 8, **caractérisée en ce que** le canal (6) se rétrécit vers l'émetteur (5).

10. Source d'ions selon la revendication 8 ou 9, **caractérisée en ce que** le canal (6) a une section transversale circulaire.
